(19) **Europäisches Patentamt**

**European Patent Office**

**Office européen des brevets**

(11) **EP 1 081 839 A2**

(12) **EUROPÄISCHE PATENTANMELDUNG**

(43) Veröffentlichungstag:
07.03.2001 Patentblatt 2001/10

(51) Int. Cl.7: **H02M 3/337**

(21) Anmeldenummer: **00202912.2**

(22) Anmeldetag: **15.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.08.1999 DE 19940137**

(71) Anmelder:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder:
• **Scheel,Thomas**
**Philips Corp.Intel.Prop.GmbH**
**52064 Aachen (DE)**
• **Hattrup,Christian**
**Philips Corp.Intel.Prop.GmbH**
**52064 Aachen (DE)**
• **Märtens,Olaf**
**Philips Corp.Intel.Prop.GmbH**
**52064 Aachen (DE)**

(74) Vertreter: **Gössmann, Klemens**
**Philips Corporate Intellectual**
**Property GmbH**
**Habsburgerallee 11**
**52064 Aachen (DE)**

(54) **Serienresonanter Konverter mit einer Regelschaltung**

(57)     Die Erfindung betrifft einen serienresonanten Konverter (1) mit einer Regelschaltung (8) zur Regelung der Ausgangsspannung des Konverters.

Um das Anlaufverhalten des Konverters zu verbessern, wird vorgeschlagen, dass die Regelschaltung (8) zur Verarbeitung eines ersten Istwerts ($U_{out}$), der von der jeweiligen Konverterausgangsspannung ($u_{out}(t)$ abhängt, und zur Verarbeitung eines zweiten Istwerts ($U_C$), der vom jeweiligen durch die Serienresonanzkreiselemente (C, L, R) des Konverters (1) fließenden Strom ($i_{res}(t)$) abhängt, vorgesehen ist, und dass die Regelschaltung (8) zur Lieferung einer das Tastverhältnis einer an den Serienresonanzkreis des Konverters gelieferten pulsweitenmodulierten Spannung ($u_{pwm}(t)$) bestimmenden Stellgröße (u) vorgesehen ist.

FIG. 1

EP 1 081 839 A2

**Beschreibung**

Die Erfindung betrifft einen serienresonanter Konverter mit einer Regelschaltung zur Regelung der Ausgangsspannung des Konverters

Derartige Konverter werden beispielsweise in Hochspannungsgeneratoren für Röntgengeräte eingesetzt.

Bei derartigen Konvertern ist üblicherweise eine Regelschaltung zur Regelung der Ausgangsspannung vorgesehen, um diese im eingeschwungenen Zustand auf einem konstanten Wert zu halten. Problematisch ist allerdings grundsätzlich das Anlaufverhalten des Konverters. So ist eine möglichst kurze Anstiegszeit und ein möglichst geringes Überschwingen am Ende der Anlaufphase erstrebenswert, um rasch den eingeschwungenen Zustand des Konverters zu erreichen. Beim Einsatz in Röntgengeräten ist ein möglichst schnelles Erreichen des eingeschwungenen Zustands deshalb anzustreben, um für den jeweiligen Patienten nachteilige nicht gewünschte Strahlendosen zu vermeiden.

Aus der US 5, 107,412 ist ein serienresonanter Konverter bekannt, der zum Einsatz in Hochspannungsgeneratoren für Röntgengeräte vorgesehen ist, und mit dem das gewünschte Anlaufverhalten noch nicht erreicht wird. Der Konverter enthält eine aus Thyristoren bestehende Vollbrücke. Es ist ein Stromdetektor zur Detektierung von Nulldurchgängen des von der Vollbrücke gelieferten und durch die Resonanzkreiselemente fließenden Stromes vorgesehen. Ein Zündimpulsgenerator generiert Zündimpulse zum Zünden der Thyristoren in Abhängigkeit von den vom Stromdetektor detektierten Nulldurchgängen. Dabei werden die Thyristoren so gesteuert, dass ein Thyristor nur jeweils dann gezündet wird, wenn der Strom durch einen bis dahin leitenden anderen Thyristor zu Null geworden und außerdem die sogenannte Freiwerdezeit ("recovery time") verstrichen ist. Ein Nulldurchgangssignal wird erst dann erzeugt, wenn der entsprechende Strom in Sperrrichtung einen Schwellwert ($i_s$) unterschritten, d.h. betragsmäßig überschritten hat. Um sicherzustellen, dass der Konverter auch bei sehr kleinen Strömen in Thyristorsperrrichtung funktioniert, wenn also ein solcher Schwellwert nicht erreicht wird, wird vorgeschlagen, ein Hilfsnulldurchgangssignal zu generieren, wenn innerhalb einer bestimmten Zeitspanne nach einem Zündimpuls kein entsprechendes Nulldurchgangssignal wie im Normalbetrieb generiert wird. Weiterhin enthält der beschriebene serienresonante Konverter einen Regler zur Regelung der Konverterausgangsspannung, der den aktuellen Wert der vom Konverter gelieferten Hochspannung mit einem Referenzwert (Sollwert) vergleicht und in nicht näher erläuterter Weise ein Reglerausgangssignal liefert, dessen Größe durch die Differenz zwischen der aktuellen vom Konverter gelieferten Hochspannung und dem Referenzwert bestimmt ist.

Der Erfindung liegt die Aufgabe zugrunde, einen serienresonanten Konverter mit verbessertem Anlaufverhalten zu schaffen.

Die Aufgabe wird dadurch gelöst, dass die Regelschaltung zur Verarbeitung eines ersten Istwerts, der von der jeweiligen Konverterausgangsspannung abhängt, und zur Verarbeitung eines zweiten Istwerts, der vom jeweiligen durch die Serienresonanzkreiselemente des Konverters fließenden Strom abhängt, vorgesehen ist, und dass die Regelschaltung zur Lieferung einer das Tastverhältnis einer an den Serienresonanzkreis des Konverters gelieferten pulsweitenmodulierten Spannung bestimmenden Stellgröße vorgesehen ist.

Mit Hilfe des erfindungsgemäßen Konverters wird durch einen zusätzlich verarbeiteten zweiten Istwert in der Konverteranlaufphase ein gegenüber herkömmlichen Konvertern verbessertes dynamisches Verhalten - insbesondere eine kürzere Anstiegszeit ("rise time"), eine verringerte maximale Überschwingung ("peak overshoot"), eine kürzere Einstellzeit ("settling time") und eine größere Robustheit gegenüber Toleranzen von Konverterbauelementen - erreicht. Herkömmliche serienresonante Konverter weisen lediglich Regelungen auf, bei denen die Differenz des Istwerts der Ausgangsspannung und eines Ausgangsspannungssollwerts gebildet wird. Ein üblicherweise verwendeter analoger Regler üblicherweise ein analoger PI-Regler - dient zur Bildung einer Stellgröße in Abhängigkeit von dieser Differenz.

In einer Ausgestaltung der Erfindung ist eine digitale Regelschaltung mit einer Regelung im Zustandsraum vorgesehen. Dies ermöglicht eine Anpassung der Konverterregelschaltung auf geänderte Rahmenbedingungen mit geringem Aufwand, was durch Softwaremodifikationen bei Verwendung eines digitalen Signalprozessors erfolgen kann.

Der zweite Istwert repräsentiert vorzugsweise Abtastwerte des durch die Serienresonanzkreiselemente des Konverters fließenden Stroms an dessen Scheitelpunkten. Insbesondere ist eine Integration des durch die Serienresonanzkreiselemente des Konverters fließenden Stroms vorgesehen, um aus den so ermittelten Werten die zur Bildung des zweiten Istwerts verwendeten Abtastwerte zu bilden.

Bei der Grundausführung der digitalen Regelschaltung ist vorgesehen, dass zur Bildung der Stellgröße von einem aus der Differenz des ersten Istwerts und eines die zu liefernde Ausgangsgleichspannung repräsentierenden Sollwerts abgeleiteten Wert sowohl ein erstes Produkt aus einem ersten Faktor und dem ersten Istwert als auch ein zweites Produkt aus einem zweiten Faktor und dem zweiten Istwert subtrahiert werden.

In einer Ausführungsvariante der digitalen Regelschaltung ist vorgesehen, dass zur Bildung der Stellgröße eine kaskadierte Reglerstruktur vorgesehen ist, insbesondere indem

- in einer äußeren Regelschleife von einem aus der Differenz des ersten Istwerts und eines die zu liefernde Ausgangsgleichspannung repräsentierenden Sollwerts abgeleiteten Wert sowohl ein erstes Produkt aus einem ersten Faktor und dem ersten Istwert als auch ein zweites Produkt aus einem zweiten Faktor und dem zweiten Istwert subtrahiert werden und

- in einer inneren Regelschleife nach einer Verarbeitung des von der äußeren Regelschleife erzeugten Differenzwerts gemäß einer Begrenzungsfunktion von dem so gebildeten Wert sowohl ein drittes Produkt aus einem dritten Faktor und dem ersten Istwert als auch ein viertes Produkt aus einem vierten Faktor und dem zweiten Istwert subtrahiert werden.

Mittels der zusätzlichen inneren Regelschleife wird eine Begrenzung des Stromes durch die Resonanzkreiselemente des Konverters erreicht.

Für den Fall einer kleinen am Konverterausgang anliegenden Last wird vorgeschlagen, in der äußeren Regelschleife den zweiten Istwert gemäß einer nichtlinearen Funktion in einen Wert umzusetzen, der anstelle des zweiten Produktes verwendet wird, denn für diesen Fall ist die Konverterregelung nicht mehr mit einer auf rein linearen Regterstrukturen beruhenden Ausführungsform adäquat umzusetzen. Insbesondere ist es für die meisten Anwendungsfälle ausreichend, als nichtlineare Funktion eine stückweise lineare Funktion anzusetzen, bei der für den Fall des Normalbetriebs im Fall kleiner Lasten als Näherung ebenfalls ein einfacher Proportionalitätsfaktor - allerdings mit einem abweichenden Wert - angesetzt wird.

In einer weiteren Ausgestaltung der Erfindung ist ein Aufsummieren der Differenzen des ersten Istwerts und eines die zu liefernde Ausgangsgleichspannung repräsentierenden Sollwerts vorgesehen, wobei die so gebildeten Summenwerte mit einem weiteren Faktor gewichtet werden. Auf diese Weise wird stationären Regelabweichungen entgegengewirkt.

Ausführungsbeispiele der Erfindung werden nachstehend anhand der Zeichnungen näher erläutert. Es zeigen:

Fig. 1    die Grundstruktur eines erfindungsgemäßen Konverters,
Fig. 2    den Verlauf einer an die Serienresonanzkreiselemente des Konverters gelieferten pulsweitenmodulierten Spannung,
Fig. 3    ein Diagramm zur Erläuterung der Istwerte für eine Regelschaltung des Konverters,
Fig. 4    eine Ausführungsform der Konverterregelschaltung,
Fig. 5    eine weitere Ausführungsform der Konverterregelschaltung,
Fig. 6    ein Diagramm zur Erläuterung der Verarbeitung eines von der Regelschaltung verarbeiteten Istwerts.

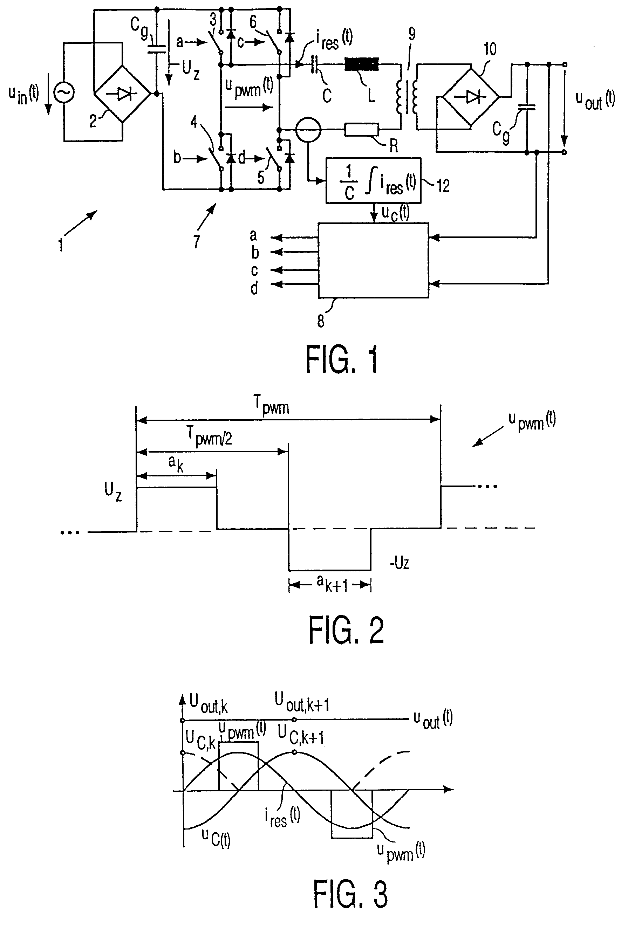

Dem in Fig. 1 gezeigten serienresonanten Konverter 1 wird eingangsseitig eine Eingangsspannung $u_{in}(t)$ - üblicherweise eine Netzwechselspannung - zugeführt. Diese Spannung wird einer Gleichrichteranordnung 2 zugeführt. Die von der Gleichrichteranordnung 2 gelieferte gleichgerichtete Spannung wird mittels eines Glättungskondensators $C_g$ geglättet.

Die geglättete und am Kondensator $C_g$ anliegende Spannung $U_z$ liegt an einer aus vier Schaltekmenten 3, 4, 5 und 6 bestehenden Vollbrückenschaltung 7 an, die durch geeignete Ansteuerung der Schaltelemente 3 bis 6 durch von einer Regelschaltung 8 gelieferte Steuersignale a, b, c und d eine pulsweitenmodulierte Spannung $U_{pwm}(t)$ erzeugt. In üblicher Weise liegt parallel zu jedem der Schalter jeweils eine Freilaufdiode. Mittels der Steuersignale a, b, c und d gibt die Regelschaltung 8 als Stellgröße das Tastverhältnis der pulsweitenmodulierte Spannung $u_{pwm}(t)$ vor. Diese Spannung $u_{pwm}(t)$ liegt an einem Serienresonanzkreis an, der als in Reihe geschaltete Resonanzkreiselemente eine Kapazität C, eine Induktivität L und einen Widerstand R aufweist. Die Induktivität L ist im vorliegenden Fall kein separates Bauelement, sondern die primärseitige Steuinduktivität eines Transformators 9, durch dessen Primärwicklung der durch die Serienresonanzkreiselemente C, L und R fließende Strom $i_{res}(t)$ fließt. Der Widerstand R repräsentiert die gesamten Ohmschen Verluste des Resonanzkreises. Die (hoch)transformierte an der Sekundärseite des Transformators 9 anliegende Spannung wird einer weiteren Gleichrichteranordnung 10 zugeführt. Diese ist ausgangsseitig mit einem Glättungskondensator $C_g$ verbunden, an dem die Konverterausgangsspannung $u_{out}(t)$ abgreifbar ist. Diese Spannung kann beispielsweise als Hochspannung für Röntgenröhren verwendet werden.

Die Regelschaltung 8, die hier als digitale Regelschaltung ausgeführt ist, verarbeitet zwei Meßgrößen zu Istwerten. Einerseits wird die Ausgangsspannung $u_{out}(t)$ gemessen, andererseits auch der Strom $i_{res}(t)$. Dabei wird aus dem Strom $i_{res}(t)$ durch Integration (Schaltungsblock 12) ein abgeleitetes Spannungssignal, d.i. die Spannung $u_C(t)$ an der Kapazität C, gebildet und der Regelschaltung 8 zugeführt. Zu diesem Zweck kann auch ein nicht idealer Integrator - z.B. ein Tiefpass - verwendet werden. Die Regelschaltung 8 wird vorzugsweise mittels eines digitalen Signalprozessors realisiert, wobei hier die verwendete Abtastfrequenz der doppelten Frequenz entspricht, mit der die Spannung $u_{pwm}(t)$ pulsweitenmoduliert ist. Es können aber auch andere Abtastfrequenzen verwendet werden, z. B. die Pulsweitenmodulationsfrequenz selbst, deren halber Wert oder auch 2/3 dieses Frequenzwertes.

Fig. 2 zeigt den prinzipiellen Verlauf der pulsweitenmodulierten Spannung $u_{pwm}(t)$. Die hier feste Periodendauer der Pulsweitenmodulation ist mit $T_{pwm}$ bezeichnet. Bei Wahl einer festen Periodendauer $T_{pwm}$ ist auch die Schaltfrequenz $f_{pwm} = 1/T_{pwm}$ konstant, deren Wert auf die sich aus der Induktivität L und der Kapazität C ergebende Resonanzfrequenz eingestellt wird. Der sich so ergebende Strom $i_{res}(t)$ ist für große Lastströme dementsprechend näherungsweise sinusförmig und liegt in Phase mit der pulsweitenmodulierten Spannung $u_{pwm}(t)$. In der ersten Hälfte der dargestellten Periode liegt ein einem Abtastzeitpunkt k (siehe Fig. 3) zugeordneter rechteckförmiger Impuls der Länge $a_k$ und der positiven Höhe $U_z$. Für den Rest der ersten Periodenhälfte ist die Spannung $u_{pwm}(t)$ gleich Null. In der zweiten Hälfte der dargestellten Periode $T_{pwm}$ liegt ein einem Abtastzeitpunkt k+1 zugeordneter rechteckförmiger Impuls der Länge $a_{k+1}$ und der negativen Höhe $-U_z$. Für den Rest der zweiten Periodenhälfte ist die Spannung $u_{pwm}(t)$ ebenfalls gleich Null. Durch die jeweiligen Werte von $a_k$, $a_{k+1}$, ... und die Periodendauer $T_{pwm}$ ist das jeweils gerade aktuelle Tastverhältnis der pulsweitenmodulierten Spannung $u_{pwm}(t)$ eindeutig bestimmt.

In Fig. 3 sind idealisierte Zeitverläufe der pulsweitenmodulierten Spannung $u_{pwm}(t)$, der Ausgangsspannung $u_{out}(t)$, des Stromes $i_{res}(t)$ und der Spannung $u_c(t)$ dargestellt. Zur Bildung von Istwerten für die Regelschaltung 8 wird einerseits die Ausgangsspannung $u_{out}(t)$ zu Zeitpunkten k, k+1, k+2, ... abgetastet, um Abtastwerte $U_{out,k}$, $U_{out,k+1}$, $U_{out,k+2}$, ... zu erhalten. Andererseits wird auch die Spannung $u_C(t)$ zu den Zeitpunkten k, k+1. k+2, ... abgetastet; von diesen Abtastwerten wird der Betrag gebildet, um so Abtastwerte $U_{c,k}$, $U_{c,k+1}$, $U_{c,k+2}$, ... zu erhalten. Die Abtastzeitpunkte werden so gewählt, dass diese jeweils in einem Maximum bzw. Minimum von $u_c(t)$ liegen, so dass sich als Abtastwerte $U_{c,k}$, $U_{c,k+1}$, $U_{c,k+2}$, ... jeweils die entsprechenden aktuellen Amplitudenwerte der an der Kapazität C abfallenden Spannung $u_C(t)$ ergeben.

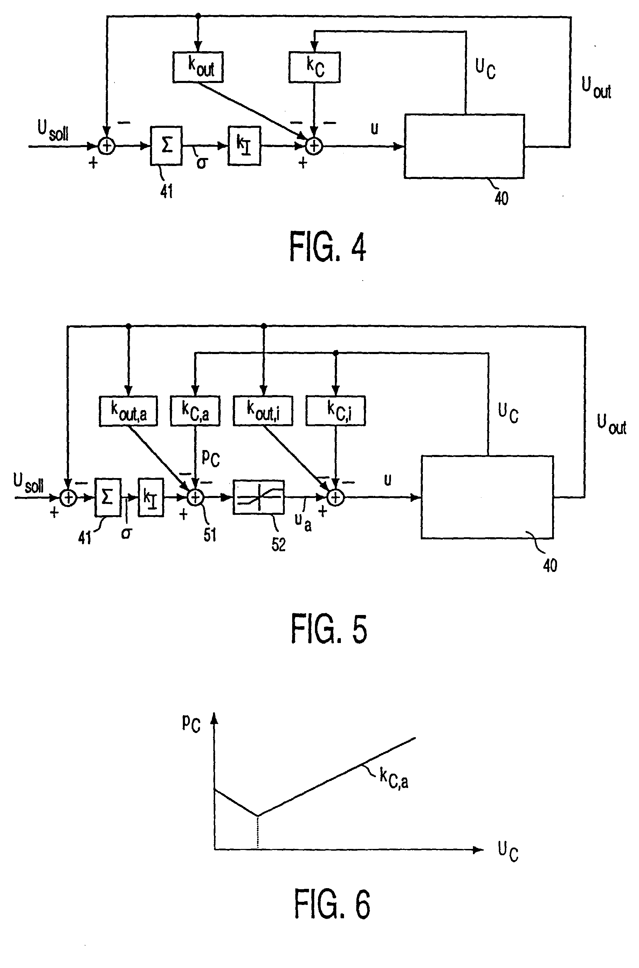

Die Wirkungsweise einer Ausführungsvariante der Regelschaltung 8 zeigt Fig. 4. Ein Block 40 stellt die Regelstrecke dar, die die Istwerte $U_{out}$ und $U_C$ in Abhängigkeit von einer ihr zugeführten Stellgröße u erzeugt. Die Istwerte und die Stellgröße liegen als Digitalwerte für verschiedene Abtastzeitpunkte k, k+1, k+2, ... vor. Der Zeitindex k ist allerdings aus Gründen der Übersichtlichkeit bei allen in Fig. 4 dargestellten zeitabhängigen Größen weggelassen.

Die Stellgröße u wird folgermaßen gebildet: Zunächst wird von einem vorgegebenen Sollwert $U_{soll}$ der aktuelle Wert $U_{out}$ subtrahiert. Die sich so ergebenden Differenzwerte werden aufsummiert (Block 41) - entsprechend einem Integrieren bei analogen Reglern - und die sich ergebende Summe σ wird mit einem Faktor $k_I$ multipliziert. Von dem sich so ergebenden Wert werden zur Bildung der Stellgröße u ein erstes Produkt aus dem ersten Istwert $U_{out}$ und einem Faktor $k_{out}$ und ein zweites Produkt aus dem zweiten Istwert $U_C$ und einem Faktor $k_C$ subtrahiert. Der Summationsblock 41 und der zugehörige Faktor $k_I$ dienen zur Eliminierung von stationären Regelabweichungen.

Im folgenden soll das Modell erläutert werden, dass zur Bestimmung der Parameter einer mittels der Regelschaltung 8 realisierten zeitdiskreten Regelung im Zustandsraum zugrunde gelegt wird. $U_{out}$ und $U_C$ werden als abgetastete Zustände aufgefasst, die rekursiv nach der Formel

$$\begin{pmatrix} U_{out} \\ U_C \end{pmatrix}_{k+1} = \mathbf{A} \begin{pmatrix} U_{out} \\ U_C \end{pmatrix}_k + \mathbf{b}\, u(a_k)$$

gebildet werden. $\mathbf{A}$ und $\mathbf{b}$ stellen Systemmatrizen dar, die sich aus den Konverterparametern ergeben.

Ein Wert $t_A$ stellt die Abtastzeit der digitalen Regelung dar, die gleich der halben Periodendauer $T_{pwm}$ der Pulsweitenmodulation ist (siehe Fig. 2). Weiterhin ist die Stellgröße u für den Abtastzeitpunkt k bestimmt durch eine nichtlineare (Sinus-) Funktion, die den Zusammenhang mit der Zeitdauer $a_k$ (siehe Fig. 2), die ja hier wegen der festen Periodendauer $T_{pwm}$ der Pulsweitenmodulation unmittelbar ein Maß für das Tastverhältnis der Pulsweitenmodulation bezüglich des Abtastzeitpunktes k angibt, angibt:

$$u(a_k) = \sin(\pi a_k)$$

Die jeweiligen Werte $a_k$ werden unter Zugrundelegung dieser Formel aus der Stellgröße u bestimmt.

Dieses Modell wird noch erweitert, indem auch die Parameter σ und $k_I$ berücksichtigt werden. σ wird als zusätzlicher Zustand des Modells angesetzt. Dies führt auf ein erweitertes Gleichungssystem:

$$\begin{pmatrix} U_{out} \\ U_C \\ \sigma \end{pmatrix}_{k+1} = \begin{pmatrix} \mathbf{A} & \vdots & 0 \\ & & 0 \\ -1 & 0 & \vdots & 1 \end{pmatrix} \begin{pmatrix} U_{out} \\ U_C \\ \sigma \end{pmatrix}_k + \begin{pmatrix} \mathbf{b} \\ 0 \end{pmatrix} u + \begin{pmatrix} 0 \\ 0 \\ 1 \end{pmatrix} U_{soll}$$

mit

$$u = -(k_{out} \quad k_C \quad -k_I)^T \begin{pmatrix} U_{out} \\ U_C \\ \sigma \end{pmatrix}$$

Die Parameter $k_{out}$, $k_C$ und $k_I$ lassen sich nach der sogenannten Polplazierungsmethode - d.h. einem Entwurf durch Eigenwertvorgabe bzw. Polvorgabe - (siehe beispielsweise O. Föllinger, "Lineare Abtastsysteme", R. Oldenburg Verlag, 1982, Kapitel 7.6) bestimmen, was voraussetzt, dass in vorausgehenden Schritten zunächst die gewünschten dynamischen Eigenschaften des Systems wie Anstiegszeit, maximale Überschwingung und Einstellzeit vorgegeben werden und aus diesen Vorgaben korrespondierende Eigenwerte der Systemmatrix **A** bestimmt werden. Wenn ein Überschwingen des Systems gänzlich vermieden werden soll - was regelmäßig anzustreben ist -, bedingt dies rein reelle Eigenwerte ohne Imaginäranteil.

Fig. 5 zeigt die Wirkungsweise einer weiteren Ausführungsvariante der Regelschaltung 8 mit einer kaskadierten Reglerstruktur, die eine Begrenzung des Stromes $i_{res}(t)$ bewirkt, so dass eine Bauelementzerstörung aufgrund eines zu großen Wertes von $i_{res}(t)$, womit ohne weitere Maßnahmen während der Anlaufphase des Konverters 1 zu rechnen ist, vermieden wird. Wie in der Ausführungsvariante gemäß Fig. 4 ist auch hier mit einem Block 40 die Regelstrecke dargestellt, die die Istwerte $U_{out}$ und $U_C$ in Abhängigkeit von einer ihr zugeführten Stellgröße u erzeugt. Der Zeitindex k ist wiederum bei den dargestellten zeitabhängigen Größen weggelassen. Die Regelung gemäß Fig. 5 weist im Gegensatz zur Regelung gemäß Fig. 4 eine zusätzliche innere Regelschleife (Block 52, $k_{out,i}$, $k_{C,i}$) auf.

Die Stellgröße u wird folgendermaßen gebildet: Zunächst wird von einem vorgegebenen Sollwert $U_{soll}$ der aktuelle Wert $U_{out}$ subtrahiert. Die sich so ergebenden Differenzwerte werden aufsummiert (Block 41) und die sich ergebende Summe σ wird mit einem Faktor $k_I$ multipliziert. Von dem sich so ergebenden Wert werden an einem Summationspunkt 51 ein erstes Produkt aus dem ersten Istwert $U_{out}$ und einem Faktor $k_{out,a}$ und ein zweites Produkt $p_C$ aus dem zweiten Istwext $U_C$ und einem Faktor subtrahiert. Der Faktor ist für kleine Werte $U_C$, die bei kleinen, zu einem diskontinuierlichen Resonanzstrom $i_{res}(t)$ führenden Lasten vorliegen, anders als für große Werte $U_C$. Fig. 6 zeigt den Zusammenhang zwischen $U_C$ und $p_C$. Der Faktor $k_{C,a}$ ergibt sich als Gradient der Funktion $p_C(U_C)$. Im vorliegenden Fall ist vereinfachend auch für den Bereich kleiner $U_C$ ein linearer Zusammenhang angesetzt (der zu einem für alle $U_C$ dieses Bereichs gleichen negativem Faktor führt), was sich als hinreichend genaue Näherung für den grundsätzlich als nichtlinear anzusetzenden Zusammenhang herausgestellt hat. Für den übrigen Bereich größerer Werte $U_C$ wird der oben erläuterte lineare Zusammenhang zwischen $U_C$ und $p_C$ angesetzt. Damit ergibt sich ein stückweise linearer Zusammenhang zwischen $U_C$ und $p_C$. Auf diese Weise wird bei kleinen Strömen $i_{res}(t)$ bzw. kleinen Spannungen $u_C(t)$, d.h. bei kleinen Lasten (Lastströmen) am Konverterausgang, ein Überschwingen in der Konverteranlaufphase vermieden.

Der sich am Ausgang des Summationspunktes 51 ergebende Differenzwert wird einer Begrenzungsfunktion unterworfen (Block 52), d.h. der Differenzwert wird auf einen vorgegebenen Grenzwert begrenzt. Dies entspricht einer Begrenzung des Wertes des Zustands $U_C$, der ja äquivalent zur jeweiligen Amplitude der Spannung $u_C(t)$ ist. Da die Frequenz $f_{pwm} = 1/T_{pwm}$ der Pulsweitenmodulation konstant gehalten wird, lässt sich der zum Grenzwert der Begrenzungsfunktion proportionale Maximalwert $U_{C,max}$ des Zustands $U_C$ unter der Voraussetzung eines sinusförmigen Stroms $i_{res}(t)$ direkt aus dem vorgegebenen Maximalwert des Stroms $i_{res}(t)$ berechnen durch

$$U_{C,max} = \frac{i_{res,max}}{2\pi f_{pwm} C}$$

Von dem am Ausgang des Blocks 52 gelieferten Wert $u_a$ wird in der inneren Regelschleife dann sowohl ein Produkt $k_{out,i} U_{out}$ als auch ein Produkt $k_{C,i} U_C$ subtrahiert. Der so gebildete Differenzwert ist die der Regelstrecke 40 zugeführte Stellgröße u, die - wie schon oben erläutert - zur Einstellung der jeweiligen Impulsdauer $a_k$ und damit des Tastverhältnisses der pulsweitenmodulierten Spannung $U_{pwm}(t)$ dient. Das Tastverhältnis liegt hier auf im Bereich zwischen Null und 1/2. Vorzugsweise sollte auch der vorn Block 41 gelieferte Wert begrenzt werden.

Für den Fall, dass die Begrenzung des Stromes $i_{res}(t)$ durch die innere Regelschleife nicht aktiv ist, lassen sich die innere und äußere Regelschleife der Reglerstruktur gemäß Fig. 5 kombinieren, was zu einer vereinfachten Reglerstruktur wie in Fig. 4 führt. Der Zusammenhang zwischen den Parametern $k_{out,a}$, $k_{out,i}$, $k_{C,a}$, $k_{C,i}$ und den Parametern der vereinfachten Reglerstruktur $k_{out,}$ und $k_C$ ergibt sich dann zu

$$k_{out,a} = k_{out} - k_{out,i}$$

$$k_{C,a} = k_C - k_{C,i}$$

## Patentansprüche

1.  Serienresonanter Konverter (1) mit einer Regelschaltung (8) zur Regelung der Ausgangsspannung des Konverters,
    dadurch gekennzeichnet,

    dass die Regelschaltung (8) zur Verarbeitung eines ersten Istwerts ($U_{out}$), der von der jeweiligen Konverterausgangsspannung ($u_{out}(t)$ abhängt, und zur Verarbeitung eines zweiten Istwerts ($U_C$), der vom jeweiligen durch die Serienresonanzkreiselemente (C, L, R) des Konverters (1) fließenden Strom ($i_{res}(t)$) abhängt, vorgesehen ist, und
    dass die Regelschaltung (8) zur Lieferung einer das Tastverhältnis einer an den Serienresonanzkreis des Konverters gelieferten pulsweitenmodulierten Spannung ($u_{pwm}(t)$) bestimmenden Stellgröße (u) vorgesehen ist.

2.  Konverter nach Anspruch 1,
    dadurch gekennzeichnet,

    eine digitale Regelschaltung (8) mit einer Regelung im Zustandsraum vorgesehen ist.

3.  Konverter nach Anspruch 2,
    dadurch gekennzeichnet,

    dass der zweite Istwert ($U_C$) Abtastwerte des durch die Serienresonanzkreiselemente (C, L, R) des Konverters (1) fließenden Stroms ($i_{res}(t)$) an dessen Scheitelpunkten repräsentiert.

4.  Konverter nach Anspruch 3,
    dadurch gekennzeichnet,

    dass eine Integration des durch die Serienresonanzkreiselemente (C, L, R) des Konverters (1) fließenden Stroms ($i_{res}(t)$) vorgesehen ist, um aus den so ermittelten Werten die zur Bildung des zweiten Istwerts ($U_C$) verwendeten Abtastwerte zu bilden.

5.  Konverter nach einem der Ansprüche 1 bis 4,
    dadurch gekennzeichnete,

    dass zur Bildung der Stellgröße (u) von einem aus der Differenz des ersten Istwerts ($U_{out}$) und eines die zu liefernde Ausgangsgleichspannung repräsentierenden Sollwerts ($U_{soll}$) abgeleiteten Wert sowohl ein erstes Produkt aus einem ersten Faktor ($k_{out}$) und dem ersten Istwert ($U_{out}$) als auch ein zweites Produkt aus einem zweiten Faktor ($k_C$) und dem zweiten Istwert ($U_C$) subtrahiert werden.

6.  Konverter nach einem der Ansprüche 1 bis 4,
    dadurch gekennzeichnet,

    dass zur Bildung der Stellgröße (u) eine kaskadierte Reglerstruktur vorgesehen ist.

7.  Konverter nach Anspruch 6,

dadurch gekennzeichnet,

dass zur Bildung der Stellgröße (u) in der kaskadierten Reglerstruktur

- in einer äußeren Regelschleife von einem aus der Differenz des ersten Istwerts ($U_{out}$) und eines die zu liefernde Ausgangsgleichspannung repräsentierenden Sollwerts ($U_{soll}$) abgeleiteten Wert sowohl ein erstes Produkt aus einem ersten Faktor ($k_{out,a}$) und dem ersten Istwert ($U_{out}$) als auch ein zweites Produkt aus einem zweiten Faktor ($k_{C,a}$) und dem zweiten Istwert ($U_C$) subtrahiert werden und
- in einer inneren Regelschleife nach einer Verarbeitung des von der äußeren Regelschleife erzeugten Differenzwerts gemäß einer Begrenzungsfunktion (52) von dem so gebildeten Wert ($u_a$) sowohl ein drittes Produkt aus einem dritten Faktor ($k_{out,i}$) und dem ersten Istwert ($U_{out}$) als auch ein viertes Produkt aus einem vierten Faktor ($k_{C,i}$) und dem zweiten Istwert ($U_C$) subtrahiert werden.

8. Konverter nach Anspruch 7,
   dadurch gekennzeichnet,

   dass für den Fall einer kleinen am Konverterausgang anliegenden Last in der äußeren Regelschleife der zweite Istwert ($U_C$) gemäß einer nichtlinearen Funktion in einen Wert ($p_C$) umgesetzt wird, der anstelle des zweiten Produkts verwendet wird.

9. Konverter nach Anspruch 8,
   dadurch gekennzeichnet,

   dass die nichtlineare Funktion stückweise linear ist.

10. Konverter nach einem der Ansprüche 5 bis 9,
    dadurch gekennzeichnet,

    dass ein Aufsummieren (41) der Differenzen des ersten Istwerts ($U_{out}$) und eines die zu liefernde Ausgangsgleichspannung repräsentierenden Sollwerts ($U_{soll}$) vorgesehen ist, wobei die so gebildeten Summenwerte ($\sigma$) mit einem weiteren Faktor ($k_I$) gewichtet werden.

FIG. 1

FIG. 2

FIG. 3

FIG. 4

FIG. 5

FIG. 6